# EUROPEAN PATENT APPLICATION

(11) **EP 4 810 828 A1**
(43) Date of publication of application: **23.09.2026**
(21) Application number: 26165333.1
(22) Date of filing: 17.03.2026
(51) Int. Cl.: F16H 55/06, B22F 3/00, F16H 55/14

(54) **LIGHTWEIGHT GEAR**

(30) Priority: 18.03.2025 US 202519082718
(71) Applicant: Lockheed Martin Corporation, Bethesda, Maryland 20817 (US)
(72) Inventor: Toni, Darryl M., Clinton, CT 06413 (US); Gmirya, Yuriy, Stratford, CT 06615 (US); Menair, Emmett Emile, Stratford, CT 06615 (US); Ivaldi, Olivia, Stratford, CT 06615 (US); West, Michael Walter, Stratford, CT 06615 (US); Dew, Nathaniel, Stratford, CT 06615 (US)
(74) Representative: Schmitt-Nilson Schraud Waibel Wohlfrom Patentanwälte Partnerschaft mbB

(57) **Abstract**

A transmission gear includes a central hub defining a rotation axis. A transmission gear may include an outer ring including a plurality of gear teeth spaced circumferentially around the outer ring. A transmission gear may include a web interconnecting the central hub to the outer ring, wherein a portion of either the outer ring or the web defines a lattice structure having a density that is less than a density of a remining portion of the gear, the density of the lattice structure having a density gradient that is continuous in a radial direction from the rotation axis.

## Description

The present disclosure relates to gears, and more particularly, relates to lightweight gears for a vehicle.

Gears are used in various mechanical systems to transmit torque, generally, from a motor or engine to an output. Gears may be used in a variety of applications such as tools, vehicles, or the like. Typically, gears are made from heavy metal materials in order to meet strength, dynamics, durability, endurance, and other requirements. As such, gears are often optimized to reduce weight while being able to carry the desired torque loads.

In some aspects of the present disclosure, the techniques described herein relate to a monolithic transmission gear produced through additive manufacturing, the transmission gear including a central hub defining a rotation axis, an outer ring including a plurality of gear teeth spaced circumferentially around the outer ring, and a web interconnecting the central hub to the outer ring. A portion of either the outer ring or the web defines a lattice structure having a density that is less than a density of a remining portion of the gear, the density of the lattice structure having a density gradient that is continuous in a radial direction from the rotation axis.

In some aspects, the techniques described herein relate to a method of manufacturing a transmission gear, the method including forming a body by an additive manufacturing process. The body includes a central hub defining a rotation axis, an outer ring, a web interconnecting the central hub to the outer ring, and a portion of the outer ring or web having a lattice structure with a density that is less than a density of a remining portion of the gear, the density of the lattice structure having a density gradient that is continuous in a radial direction from the rotation axis.

Other aspects of the disclosure will become apparent by consideration of the detailed description and accompanying drawings.

### BRIEF DESCRIPTION OF THE DRAWINGS

FIG. 1 is a schematic view of a helicopter illustrating a helicopter drive train.
FIG. 2 is a perspective view of the helicopter drive train of FIG. 1 including a plurality of different gears.
FIG. 3 is a perspective view of a lightweight gear according to one embodiment for use with the helicopter drive train of FIG. 2.
FIG. 4 is a perspective cross-sectional view of the gear of FIG. 3 taken along lines 4-4.
FIG. 5 is a perspective cross-sectional view of a lightweight gear according to another embodiment of the invention.
FIG. 6 is a perspective view of a lightweight gear according to another embodiment of the invention.
FIG. 7 is a perspective view of a lightweight gear according to another embodiment of the invention.
FIG. 8 is a cross-sectional view of the gear of FIG. 7 taken along lines 8-8.
FIG. 9 is a perspective view of a lightweight gear according to another embodiment of the invention.
FIG. 10 is a perspective view of a Laser Powder Bed Fusion (LPBF) machine used to produce the gear of FIG. 1.

Before any embodiments are explained in detail, it is to be understood that the embodiments described herein are provided as examples and the details of construction and the arrangement of the components described herein or illustrated in the accompanying drawings should not be considered limiting. Also, it is to be understood that the phraseology and terminology used herein is for the purpose of description and should not be regarded as limited. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling.

In addition, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. Furthermore, the term "radially" as used herein may refer to a direction or a relationship of components with respect to a line extending outward from a shared centerline, axis, or similar reference, for example in a plane of a cylinder or disc that is perpendicular to the centerline or axis. As used herein, the term "substantially," "about," and "approximately" denotes within 5% to account for manufacturing tolerances.

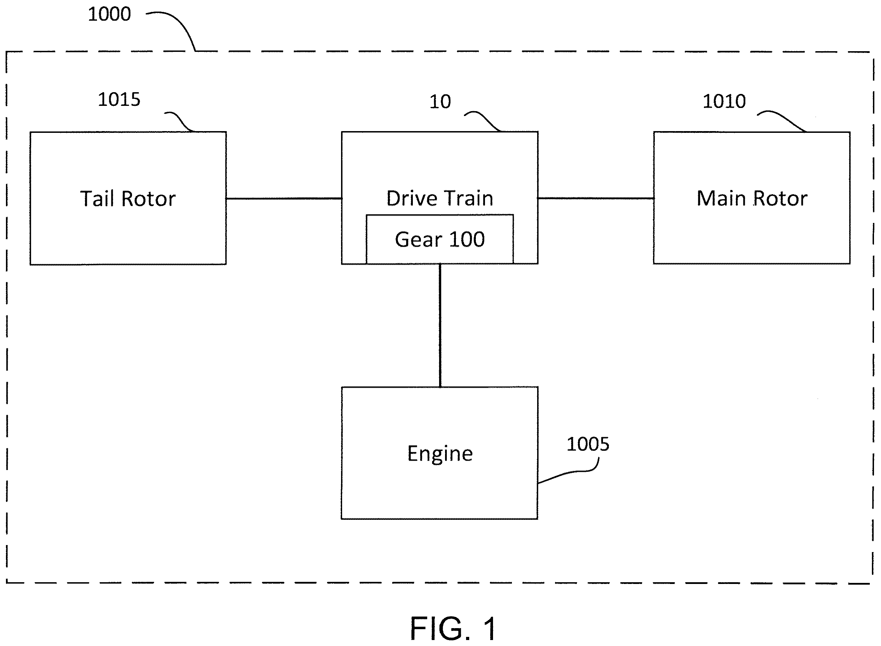

FIG. 1 illustrates a helicopter drive train 10 for use in a rotorcraft vehicle such as a helicopter 1000. The helicopter 1000 includes an engine 1005 that transfers torque to the drive train 10. The engine 1005 may be any engine that powers helicopters such as a gas turbine engine, turboprop engine, turboshaft engine, or the like. In addition, as discussed in more detail below, the engine 1005 may be two engines that provide two independent inputs to the drive train 10. During operation, the engine 1005 drives the drive train 10 to transmit torque to a main rotor 1010. In some embodiments, the engine 1005 may also transfer torque to a tail rotor 1015 or another rotor of the helicopter 1000 separate from the main rotor 1010. As will be discussed, the drive train 10 includes a lightweight gear 100 that reduces the weight of the drive train 10 and the helicopter 1000 which may increase the fuel economy of the helicopter 1000, assist in dampening vibrations in the drive train 10, or reduce the overall noise of operating the helicopter 1000.

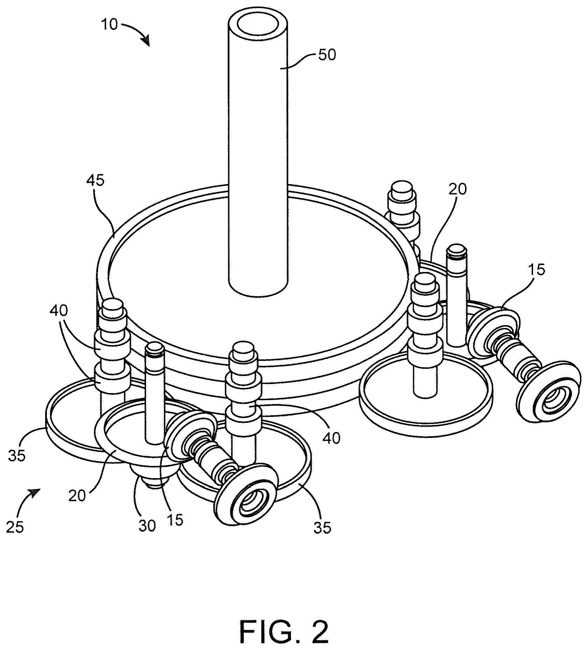

FIG. 2 illustrates a helicopter drive train 10 where the outer casing or gearbox has been omitted to view various internal drive train components and the associated interaction. The drive train 10 delivers torque from engine shafts to a main rotor shaft. In the illustrated embodiment, two engines (not shown) drive input bevel pinions 15. Each input bevel pinion 15 drives a first stage bevel gear 20 which, in turn, drives a split-torque transmission module 25. The torque split transmission module 25 includes a second stage spur pinion 30 disposed between a pair of load share spur gears 35. More specifically, the first stage bevel gear 20 is coaxial with and drives the second stage spur pinion 30, which is disposed between and drives each of the load share spur gears 35. Each of these load share spur gears 35 are co-axial with and drive second stage double helical pinions 40. Each of the helical pinions 40 drives a large diameter double helical bull gear 45 which, in turn, drives a main rotor shaft 50 associated with the main rotor 1010 of the helicopter 1000 discussed above. While described in the context of a drive train for a helicopter, aspects of the invention can be used with other types of aircraft, including fixed wing, tilt wing, and tilt rotor, and can also be used for drive trains used for maritime vessels, automative and locomotives, and industrial machinery.

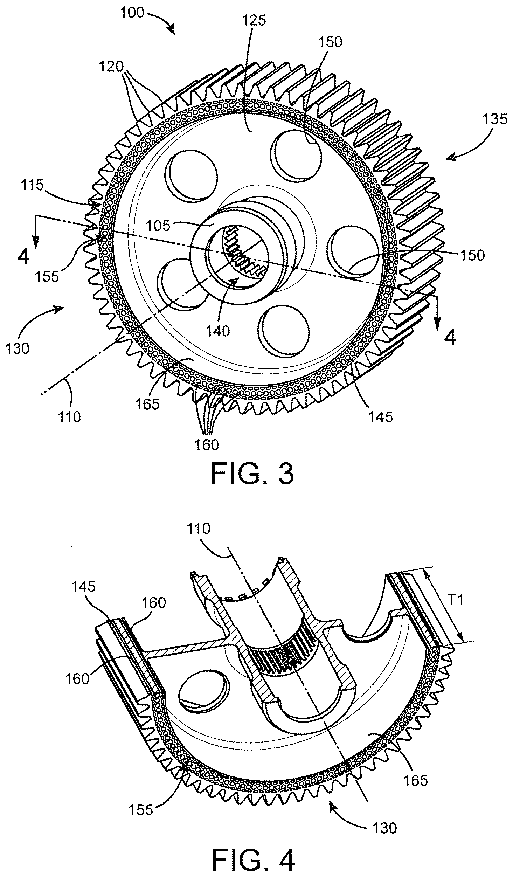

FIG. 3 illustrates a gear 100 for use in the drive train 10 of FIG. 2. In the illustrated embodiment, the gear 100 may be substituted with any of the gears or pinions discussed above. In other embodiments, the gear 100 may be implemented into alternative helicopter drive trains or transmissions. In further embodiments, the gear 100 may be implemented into other vehicle transmissions. In some embodiments, the gear 100 may be substituted for any other gear.

The gear 100 defines a body including a central hub 105 that defines a rotation axis 110, an outer ring 115 including a plurality of gear teeth 120 extending therefrom, and a web 125 interconnecting the hub 105 to the outer ring 115. The central hub 105, the outer ring 115, and the web 125 extend circumferentially about the rotation axis 110 so that the gear 100 is generally cylindrical. The gear 100 also defines a first front side 130, a second rear side 135 opposite the first side 130, and a thickness T1 (FIG. 4) defined between the first side 130 and the second side 135. The hub 105 defines a central opening 140 with the rotation axis 110 extending centrally through the central opening 140. The central opening 140 is configured to receive a shaft for rotation therewith. The central opening 140 may include a feature such as a notch, key, or spline to unitize the shaft and the gear for rotation. In the illustrated embodiment, the outer ring 115 is defined by a wall 145 that extends between the first and second sides 130, 135. The wall 145 defines the thickness T1 of the gear 100. In the illustrated embodiment, the thickness T1 of the wall 145 is greater than the thickness of the web 125. In other words, the web 125 is substantially thinner than the wall 145. In other embodiments, the web 125 may have the same thickness as the wall 145 or a greater thickness than the wall 145. The web 125 may include a plurality of apertures 150 spaced about the rotation axis 110.

As illustrated in FIG. 3, a lattice structure 155 is defined on the wall 145 of the outer ring 115. The lattice structure 155 is defined by a plurality of recesses or void spaces 160. The void spaces 160 are defined by the absence of material in the gear 100. In the illustrated embodiment, the void spaces 160 extend between the first and second sides 130, 135 as shown in FIG. 4. In other embodiments, the void spaces 160 may extend partially between the first and second sides 130, 135. Further, the void spaces 160 are generally rectilinear and extend in a direction parallel to the rotation axis 110. In other embodiments, as will be discussed in more detail below, the void spaces 160 may not be rectilinear.

The lattice structure 155 is arranged in a repeating pattern that extends circumferentially about the wall 145. In addition, the lattice structure 155 extends continuously in a radial direction defined from the rotation axis 110 towards the outer ring 115. In other embodiments, as will be described in more detail below, the lattice structure 155 may extend continuously in an axial direction. In the illustrated embodiment, the lattice structure 155 is honeycomb-shaped and includes void spaces 160 that are generally hexagonally shaped. In other embodiments, the lattice structure 155 may include void spaces 160 that are circular, triangular, diamond, or the like. The repeating pattern of the lattice structure 155 extends partially between an inner wall 165 and the plurality of gear teeth 120. In other embodiments, the repeating pattern of the lattice structure 155 may extend entirely between the inner wall 165 and the gear teeth 120. For example, the lattice structure 155 may extend between 25% and 75% of the distance between the inner wall 165 and the gear teeth 120. In other embodiments, the lattice structure 155 may extend more than 75% or less than 25% of the distance between the inner wall 165 and the gear teeth 120. In further embodiments, the lattice structure 155 may extend up to 100% of the distance between the inner wall 165 and the gear teeth 120.

Due to the lattice structure 155 and void spaces 160, the outer ring 115 of the gear 100 defines a density that is different than the density of the remainder of the gear 100. Specifically, the density on the area of the outer ring 115 with the lattice structure 155 is less than the density of the remainder of the gear 100. For example, the density on the portion of the wall 145 with the lattice structure 155 is 80% less than the density for the remainder of the gear 100. In other words, the portion of the wall 145 with the lattice structure 155 is approximately 80% lighter or includes 80% less material than the remainder of the gear 100. In some embodiments, the density on the portion of the wall 145 with the lattice structure 155 may be up to 95% less than the density for the remainder of the gear 100. In further embodiments, the density on the portion of the wall 145 with the lattice structure 155 may be between 25% and 80% less than the density for the remainder of the gear 100. In other embodiments, the density on the portion of the wall 145 with the lattice structure 155 may be between 60% and 90% less than the density for the remainder of the gear 100. In the illustrated embodiment, the density of the lattice structure 155 is continuous in a radial direction. In other words, a density gradient of the lattice structure 155 is constant in a radial direction. Providing the gear 100 with a portion including a lattice structure 155 having a lower density than the remainder of the gear 100 lightens the gear 100 without altering the integrity of the gear. In addition, providing the gear 100 with a portion including a lattice structure 155 saves cost on materials since less material is needed due to the void spaces 160.

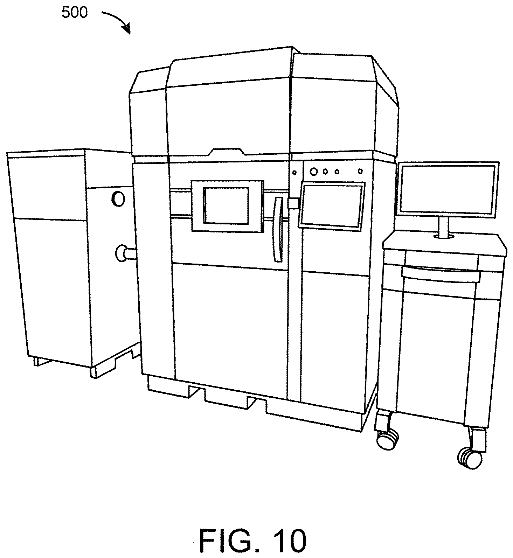

In the illustrated embodiment, the gear 100 is manufactured using an additive manufacturing process, such as 3D printing. Specifically, the gear 100 is made by adding layer-upon-layer of metal material (e.g., a liquid powder material or a fused powder) to create the general shape of the gear. In some embodiments, the metal material may be, for example, Ferrium C64 gear steel. In other embodiments, the metal material may be Cress3161, c64 steel, or other ferrous alloy materials. To create the gear 100 using 3D printing, a 3D drawing of the gear 100 may be produced in a computer aided design (CAD) software program. Then, a printing machine 500, such as the one shown in FIG. 10, reads data from the CAD file and lays down or adds successive layers of fused powder metals in a layer-upon-layer fashion to fabricate the gear 100. Specifically, the machine 500 used to produce the gear 100 is a Laser Powder Bed Fusion (LPBF) machine called the M290. Different sizes and/or shapes of gears (e.g., gears having different numbers of teeth, lattice structures, etc.) may be made using this process. In other embodiments, other relevant powder metal additive manufacturing process may be used to manufacture the gear 100. For example, the gear 100 may be produced through a binder jetting process followed by a sintering process. Alternatively, the gear 100 may be produced through a directed energy disposition process. In further embodiments, the manufacturing process above may also include additional steps to optimize the lattice structure 155. For example, the CAD may be created using a first CAD software program. Then, the CAD may be exported to a second CAD software (e.g., nTopology), to generate an optimal size and shape of the lattice structure 155 if the first CAD software program is not capable. Further, the CAD model with an optimized lattice structure 155 can then be uploaded to a third CAD software program (e.g. Materialise Magics, EOS EOSPRINT,or the like) to interpret the date from the CAD, pre-process and generate a build file, and export the CAD model to a machine readable format (e.g. a file that the LPFB can read).

By using an additive manufacturing process, the lattice structure 155 may be incorporated into the gear 100 without having to later remove material from the gear 100. This process helps reduce costs by not wasting excess material. In addition, the overall shape of the gear 100 can be more precisely designed. For example, using an additive manufacturing process the gear 100 can be minimally processed and is produced at near net-shape. In other words, after the additive manufacturing process is completed, the gear 100 is generally at final form. Further, the additive manufacturing process produces the gear 100 in monolithic form as a single piece without the need to add other components post manufacturing. As such, the gear 100 is generally made entirely from the same material. In some embodiments, the gear 100 may be made using two or more materials. In other embodiments, the gear 100 may be produced using other manufacturing processes such as injection molding, or the like. In further embodiments, the gear 100 may be formed to near net form including the central hub 105, the web 125, and the outer ring 115 with the lattice structure 155 and then a further manufacturing process may be used to form the gear teeth 120 or the feature to connect the shaft to the gear 100. For example, the gear teeth 120 may be added through a grinding process after a majority of the body of the gear 100 has been formed.

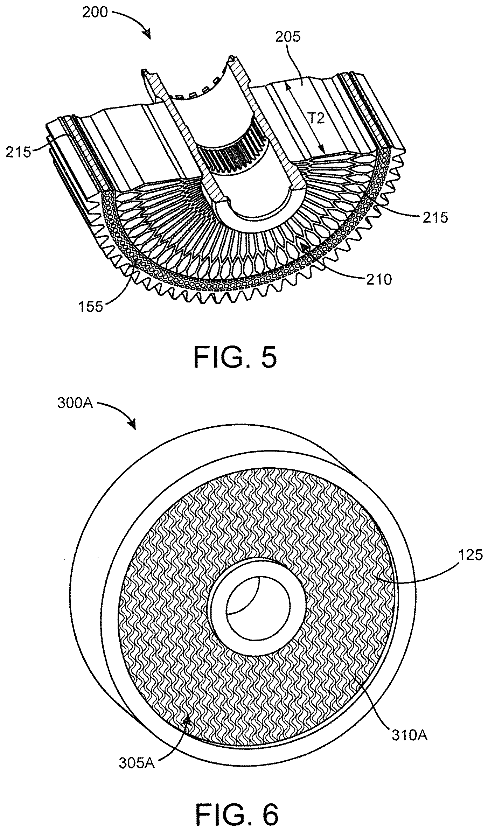

FIG. 5 illustrates a gear 200 for use in the drive train 10 described above according to another embodiment. The gear 200 is similar to the gear 100 described above with like features being represented with like reference numbers. The gear 200 includes a web 205 with a lattice structure 210 in addition to the lattice structure 155 on the wall 145. The web 205 includes a thickness T2 that is similar to the thickness T1 of the wall 145. As such, the thickness T2 of the web 205 is generally equal to the thickness of the gear 200 between the first and second sides 130, 135. The lattice structure 210 on the web 205 may include a repeating pattern similar to the repeating pattern of the lattice structure 155 on the wall 145. Alternatively, the lattice structure 210 on the web 205 may include a different repeating pattern on the web 205 than on the wall 145.

In some embodiments, the lattice structure 210 may only be on the web 205 and the lattice structure 155 on the wall 145 may be omitted. In further embodiments, a third lattice structure may be included on the hub 105 or other portion of the gear 200. In general, any portion of the gear 200 may be formed with a lattice structure using the additive manufacturing process described above. As such, the gear 200 may include a portion with a first lattice structure and a portion with a second lattice structure that is different than the first lattice structure. The lattice structure 210 of the web 205 includes void spaces 215 that have generally larger volumes than the void spaces 160 on the wall 145. However, the lattice structure 210 on the web 205 may include void spaces that are the same size as the void spaces 160 on the wall 145. By providing the lattice structure 210 on the web 205, further weight reduction of the gear 200 can be achieved. Similar to the lattice structure 155 of the wall 145 the lattice structure 210 of the web 205 is continuous in a radial direction from the rotation axis 110. In addition, the void spaces 215 of the lattice structure 210 on the web 205 extend between the first and second sides 130, 135.

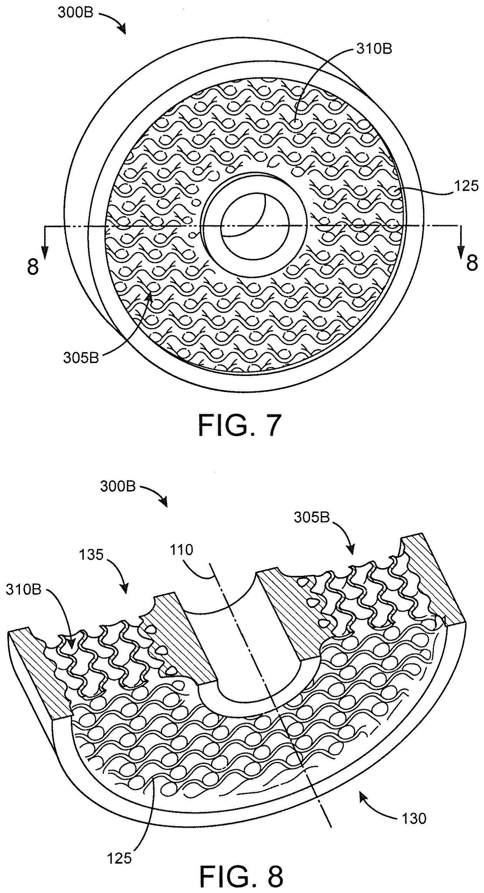

FIGS. 6 and 7 illustrate gears 300A, 300B, respectively, according to other embodiments of the invention. The gears 300A, 300B are similar to the gear 100 described above with like features being represented by like reference numbers. However, the gears 300A, 300B include lattice structures 305A, 305B on the web 125 that are gyroid-shaped. In other words, the lattice structures 305A, 305B of the gears 300A, 300B include void spaces 310A, 310B that are worm-hole shaped including a highly ordered and interconnected pore network with a specific surface area. In some embodiments, the lattice structure 305B may be beam-style, honeycomb-shaped, or other gyroid shapes such as triply periodic minimal surface.

FIG. 8 illustrates a cross-sectional view of the gear 300B. Although not shown, the gear 300A includes a similar lattice structure but for conciseness only one cross-section is shown and described below. The lattice structure 305B of the gear 300B includes a repeating pattern that extends continuously in a radial direction about the web 125 and in an axial direction along the rotation axis 110 through the web 125 between the first and second sides 130, 135. As such, the density of the web 125 is continuous in both an axial and radial direction. In other embodiments, the density of the web 125 may be continuous in only an axial direction. In other embodiments, the geometry of the lattice structure 305B evolves radially away from the rotation axis 110 to have a changing ratio of the volume of solid material (i.e., lattice structure 305B) to the volume of no material (i.e., void spaces 310B). For example, the gear 300B may include a ratio of the volume of solid material to the volume of no material at a position more adjacent the hub 105 that is between 3.0 to 4.0 and a ratio of the volume of solid material to the volume of no material at a position more adjacent the outer ring 115 that is between 1.0 and 2.0. A continuous density gradient can be achieved by modulating the design parameters in a radial direction, such as a thickness of a wall that defines the void spaces 310B of the lattice structure 305B, the volume of the void space 310B, or the shape of the void space 310B, in a way that the ratio of volume of the solid material to the volume of no material evolves continuously or uniformly rather than in step-changes from one circumferential portion of the lattice structure 305A to another circumferential portion of the lattice structure 305B in a radial direction. In other words, the density gradient of the lattice structure 305B does not change at a specific boundary or position of the lattice structure 305B. Conversely, a step-change in density may mean a step-change in stiffness at that boundary which could adversely affect the performance or service life of the gear 300B.

With reference back to FIGS. 6 and 7, the gears 300A, 300B may be optimized to accentuate certain characteristics. Specifically, using a computer aided design program and the additive manufacturing process described above, the gears 300A, 300B may be optimized to have a specific weight, frequency or other characteristics. The gears 300A, 300B having a specific frequency is important to reduce noise and chatter that may be produced during operation of the drive train 10. Noise produced from the gears 300A, 300B subtract from the overall output of the drive train 10 and is typically a result to be avoided. For example, a gear not including a lattice structure may include a weight that is 67.7 ounces and a baseline frequency of 3371 Hz. However, a gear 300A including a lattice structure 305A that optimizes frequency, such as the gear 300A of FIG. 6, may include a weight that is 67.5 ounces and a frequency of 4152 Hz. As such, the overall weight of the gear 300A may be reduced by 0.2 ounces and the frequency of the gear 300A may be increased by 23% to reduce chatter. In other embodiments, the frequency of the gear 300A may be increased by more than 23% depending on the application. Further, a gear 300B including a lattice structure 305B that optimizes weight reduction while maintaining the integrity, such as the gear 300B of FIG. 7, may include a weight that is 60.1 ounces and a frequency that is 3974 Hz. As such, the overall weight of the gear 300B may be reduced by 7.6 ounces or about 11%. In addition, the weight optimized gear 300B increases the frequency by about 18%. In further embodiments, the weight of the gear 300B may be reduced by more than 11%. It should be noted, that optimizing the gears 300A, 300B for frequency or weight varies the intensity of the repeating pattern of the gyroid lattice structures 305A, 305B. For example, the lattice structure 305A on the gear 300A of FIG. 6 has greater repetition than the lattice structure 305B on the gear 300B of FIG. 7. In other words, the void spaces 160 in the lattice structure 305B of FIG. 7 have a greater diameter and volume than the void spaces 160 in the lattice structure 305A of the gear 300A of FIG. 6.

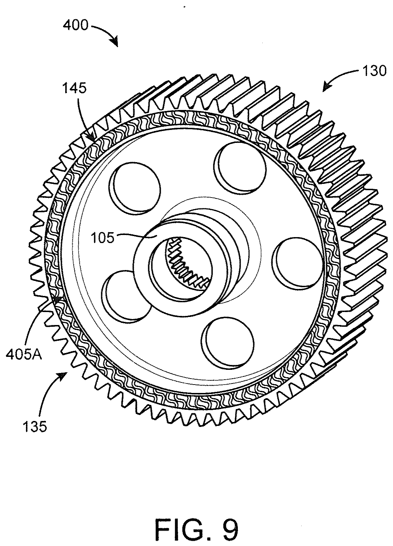

FIG. 9 illustrates a gear 400 according to another embodiment of the invention. The gear 400 is similar to the gear 100 described above with like features being represented with like reference numbers. However, the gear 400 includes a gyroidal shaped lattice structure 405 on the wall 145 that extends between the first and second sides 130, 135. The lattice structure 405 may be optimized similar to the lattice structures 305A, 305B described above to accentuate weight, frequency, or other characteristics of the gear.

The present disclosure also relates to aspects and embodiments as set out in the following numbered paragraphs:
1. A monolithic transmission gear produced through additive manufacturing, the transmission gear comprising:
   a central hub defining a rotation axis;
   an outer ring including a plurality of gear teeth spaced circumferentially around the outer ring; and
   a web interconnecting the central hub to the outer ring;
   wherein a portion of either the outer ring or the web defines a lattice structure having a density that is less than a density of a remaining portion of the gear, the density of the lattice structure having a density gradient that is continuous in a radial direction from the rotation axis.
2. The gear of paragraph 1, wherein the lattice structure defines a repeating pattern that is gyroid-shaped.
3. The gear of paragraph 1 or 2, wherein the density gradient is continuous in an axial direction.
4. The gear of one of paragraphs 1-3, wherein the lattice structure defines a repeating pattern that is hexagonally shaped.
5. The gear of one of paragraphs 1-4, wherein the lattice structure is on the web.
6. The gear of one of paragraphs 1-5, wherein the lattice structure is on the outer ring.
7. The gear of one of paragraphs 1-6, wherein the gear is made of Ferrium C64 gear steel.
8. The gear of one of paragraphs 1-7, wherein the portion of the gear with the lattice structure includes a plurality of void spaces.
9. The gear of paragraph 8, wherein the void spaces extend rectilinearly through the gear.
10. The gear of one of paragraphs 1-9, further comprising a first side and a second side opposite the first side, and wherein the lattice structure extends between the first side and the second side.
11. The gear of one of paragraphs 1-10, wherein the lattice structure is a first lattice structure on a portion of the web, and wherein a portion of the outer ring includes a second lattice structure that is different than the first lattice structure.
12. The gear of paragraph 11, wherein a thickness of the web and a thickness of the outer ring are substantially equal, and wherein the first and second lattice structures both extend through the thicknesses.
13. The gear of one of paragraphs 1-12, wherein the density of the lattice structure is between 60% and 90% less than the density of the remaining portion of the gear.
14. The gear of one of paragraphs 1-13, wherein the outer ring includes a thickness that is greater than the thickness of the web.
15. A method of manufacturing a transmission gear, the method comprising:
   forming a body by an additive manufacturing process, the body having a central hub defining a rotation axis, an outer ring, a web interconnecting the central hub to the outer ring, and a portion of the outer ring or the web having a lattice structure with a density that is less than a density of a remaining portion of the gear, the density of the lattice structure having a density gradient that is continuous in a radial direction from the rotation axis.
16. The method of paragraph 15, wherein forming the body by the additive manufacturing process includes laying successive layers of fused powder material.
17. The method of paragraph 16, wherein the fused powder material is Ferrium C64 gear steel.
18. The method of one of paragraphs 15-17, wherein forming the body by the additive manufacturing process includes forming a plurality of gear teeth circumferentially spaced about the outer ring.
19. The method of one of paragraphs 15-18, wherein forming the body by the additive manufacturing process includes forming the lattice structure with a hexagonal repeating pattern or a gyroidal repeating pattern.
20. The method of one of paragraphs 15-19, wherein forming the body by the additive manufacturing process includes forming the body at near net form in a single monolithic piece.

Various features of the invention are set forth in the following claims.

## Claims

1. A monolithic transmission gear produced through additive manufacturing, the transmission gear comprising:
a central hub defining a rotation axis;
an outer ring including a plurality of gear teeth spaced circumferentially around the outer ring; and
a web interconnecting the central hub to the outer ring;
wherein a portion of the outer ring defines a lattice structure having a density that is less than a density of a remaining portion of the gear, the density of the lattice structure having a density gradient that is continuous in a radial direction from the rotation axis.

2. The gear of claim 1, wherein the lattice structure defines a repeating pattern that is gyroid-shaped.

3. The gear of claim 1 or 2, wherein the density gradient is continuous in an axial direction.

4. The gear of one of claims 1 to 3, wherein the lattice structure defines a repeating pattern that is hexagonally shaped.

5. The gear of one of claims 1 to 4, wherein the gear is made of Ferrium C64 gear steel.

6. The gear of one of claims 1 to 5, wherein the portion of the gear with the lattice structure includes a plurality of void spaces, particularly wherein the void spaces extend rectilinearly through the gear.

7. The gear of one of claims 1 to 6, further comprising a first side and a second side opposite the first side, and wherein the lattice structure extends between the first side and the second side.

8. The gear of one of claims 1 to 7, wherein the lattice structure is a first lattice structure, and wherein a portion of the web includes a second lattice structure that is different than the first lattice structure, particularly wherein a thickness of the web and a thickness of the outer ring are substantially equal, and wherein the first and second lattice structures both extend through the thicknesses.

9. The gear of one of claims 1 to 8, wherein the density of the lattice structure is between 60% and 90% less than the density of the remaining portion of the gear, and/or wherein the lattice structure extends between 25% to 75% of a distance between an inner wall of the outer ring and the gear teeth.

10. The gear of one of claims 1 to 9, wherein the outer ring includes a thickness that is greater than the thickness of the web.

11. A method of manufacturing a transmission gear, the method comprising:
forming a body by an additive manufacturing process, the body having a central hub defining a rotation axis, an outer ring, a web interconnecting the central hub to the outer ring, and a portion of the outer ring or the web having a lattice structure with a density that is less than a density of a remaining portion of the gear, the density of the lattice structure having a density gradient that is continuous in a radial direction from the rotation axis;
wherein forming the body by the additive manufacturing process includes forming the body at near net form in a single monolithic piece.

12. The method of claim 11, wherein forming the body by the additive manufacturing process includes laying successive layers of fused powder material, particularly wherein the fused powder material is Ferrium C64 gear steel.

13. The method of claim 11 or 12, wherein forming the body by the additive manufacturing process includes forming a plurality of gear teeth circumferentially spaced about the outer ring.

14. The method of one of claims 11 to 13, wherein forming the body by the additive manufacturing process includes forming the lattice structure with a hexagonal repeating pattern or a gyroidal repeating pattern.

15. A monolithic transmission gear produced through additive manufacturing, the transmission gear comprising:
a central hub defining a rotation axis;
an outer ring including a plurality of gear teeth spaced circumferentially around the outer ring; and
a web interconnecting the central hub to the outer ring;
wherein a portion of the outer ring defines a first lattice structure and a portion of the web defines a second lattice structure that is different from the first lattice structure, the first and second lattice structures having a density that is less than a density of a remaining portion of the gear, the density of at least one of the first and second lattice structures having a density gradient that is continuous in a radial direction from the rotation axis.
